# EUROPEAN PATENT SPECIFICATION

(11) **EP 0 512 996 B1**
(45) Date of publication and mention of the grant of the patent: **12.03.1997**
(21) Application number: 90915742.2
(22) Date of filing: 07.11.1990
(51) Int. Cl.: H04Q 7/36

(54) **SECTORED VOICE CHANNELS WITH REAR LOBE PROTECTION**
AUS SEKTOREN BESTEHENDE SPRACHKANÄLE MIT RÜCKWÄRTSKEULENSCHUTZ
CANAUX VOCAUX DIVISES EN SECTEURS AVEC PROTECTION DU LOBE POSTERIEUR

(30) Priority: 19.12.1989 US 452510
(43) Date of publication of application: 19.11.1992
(73) Proprietor: NORTHERN TELECOM LIMITED, Montreal Quebec H3B 4N7 (CA)
(72) Inventor: MECHE, Paul, Solomon, Richardson, TX 75082 (US); HANLEY, Donald, Vincent, Garland, TX 75044 (US); CHAPLAIN, Eugenie, Marie, Montreal, Quebec H4J 2R4 (CA)
(74) Representative: Dennis, Mark Charles
(86) International application number: CA9000375
(87) International publication number: WO9109505

(56) References cited:
- US-A- 4 144 496
- US-A- 4 317 229
- US-A- 4 527 284
- US-A- 4 704 734
- US-A- 4 794 635

## Description

### Field of the Invention

This invention relates to mobile cellular communications systems and more particularly to an improved method of handing off between sectors of the same cell.

### Background of the Invention

A mobile cellular system is composed of a number of cells where each cell commonly contains a number of base stations sharing a single antenna complex. In an OMNI configuration, the antenna complex of a cell consists of one transmit antenna complex and two receive antennas for space diversity and is OMNI-directional and not sectorised. In this arrangement, the voice channel base station will have both of its receivers tuned to the same frequency. The receiver detecting the better quality radio signal from the mobile unit will be selected while the second receiver provides the diversity function. As the mobile moves out of its current serving cell, the radio signal will begin to degrade. When the signal reaches a predetermined level, the voice channel will inform the cell controller. The cell controller will then locate another cell in the system by soliciting locating receiver measurements from the serving cell and from all cells adjacent to the serving cell. If the serving cell reports the best quality signal, the call will remain in this cell on the same voice channel. If one of the cells adjacent to the serving cell reports the best quality signal, the cell controller will transfer the mobile call to a voice channel in this new cell. This technique is commonly referred to as cell handoff. in many sectored implementations, the antenna complex consists of one directional transmit antenna and two directional receive antennas for space diversity in each sector. A cell can contain anywhere from two to six of these sectors. A voice channel on this cell would have both of its receivers connected to the two receive antennas associated with the sector on which it resides. A handoff between sectors can be initiated according to the algorithm described above (i.e. a drop in signal quality below some predetermined threshold which is then verified by locating receiver measurements) since the directional antennas of the serving sector form an RF pattern that drops off and overlap the sectors adjacent to it. A handoff between sectors can also be initiated when the signal quality received by the voice channel from the mobile unit degrades by some delta value (a term used to identify the relative difference or value between two quantifiable numbers or values) rather than below an absolute threshold. Locating receiver measurements would then be taken in the serving sector and in the rest of the sectors of this cell to ensure that the mobile unit is served by the sector having the best signal.

Such a prior art system is shown in US Patent 4704734 which is directed to using common equipment for determining the strongest signal and for voice channel communication. One problem associated with the techniques described above is that they require a great deal of messaging and CPU usage to take the additional locating receiver measurements to determine the target cell or sector. Another problem associated with the handoff techniques currently being used, is the existence of interference when the mobile unit travels through the center of the cell and then to the rear sector. In the rear sector, the RF propagation patterns of the serving sector will allow the mobile to continue to be served by the same voice channel without signal degradation and thus without handoff initiation. The signal from this voice channel is now closer to the voice channel in another cell which uses the same frequency and to those voice channels in other cells which use frequencies adjacent this frequency. If another mobile is being served by this voice channel on the same frequency, co-channel interference occurs. If another mobile is being served by one of these voice channels on a frequency adjacent to this frequency, adjacent channel interference occurs.

It is an object to the present invention to provide a system and method of reducing sectored voice channel interference.

According to the invention, there is provided a system or method as defined in claims 1 or 2.

### Brief Description of the Drawings

Figure 1 is an illustrative view of a prior art cell with 60 degree sectorization;
Figure 2 shows the approximate RF coverage area of a single directional antenna for an embodiment of the invention with 60 degree sectorization;
Figure 3 is a flowchart of an example of an antenna scanning algorithm used by voice channels in 60 degree sectorization mode in accordance with the embodiment of the invention;
Figure 4 is a flowchart of the cell controller algorithm used for 60 degree sectorization in accordance with the embodiment of the invention;
Figure 5a is an illustrative view of a cell with 120 degree sectorization in accordance with another embodiment of the invention; and
Figure 5b is a flowchart of the antenna scanning algorithm used by voice channels in 120 degree sectorization mode of Figure 5a.

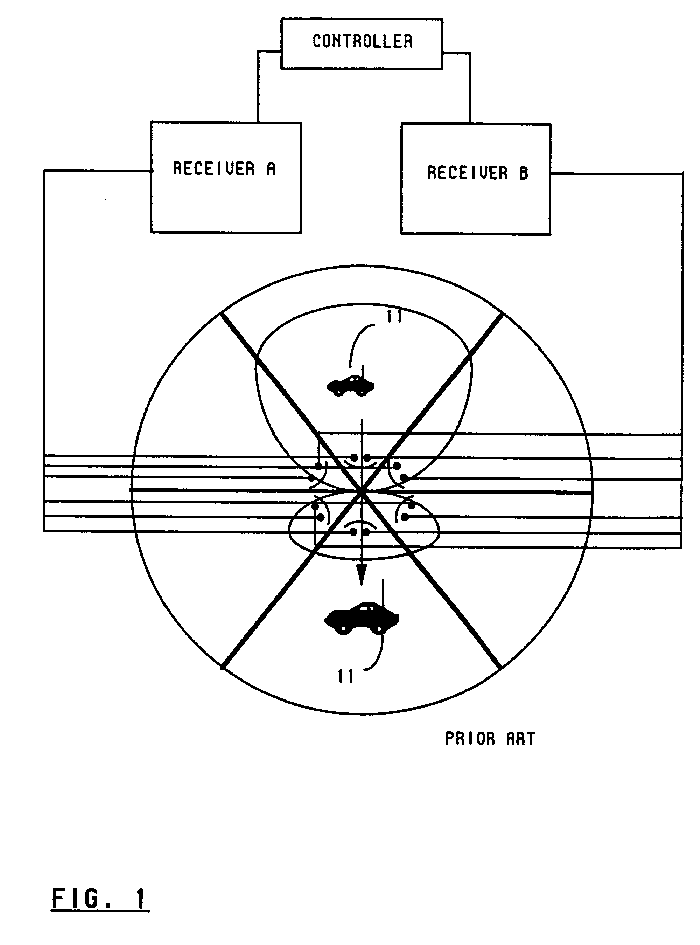

Referring now to Figure 1, we have shown an illustrative diagram showing a cell 10 forming part of a prior art cellular telephone network. The cells shown in the drawings are represented by the use of circles rather than the familiar octagon. In a typical cell using 60 degree sectorization, the base station is provided with two receivers that are connected to the directional receive antennas that form the sector on which the base station is datafilled. If this base station were serving a mobile, one of its receivers would be locked onto the mobile while the other receiver would be used for diversity. With this configuration, a mobile unit 11 can drive through the center of cell 10 without being identified as needing a handoff because of the rear lobe produced by a typical directional antenna RF pattern. If the mobile unit 11 drives through the center of the cell to a rear sector, without handing off, it would cause interference in adjoining cells.

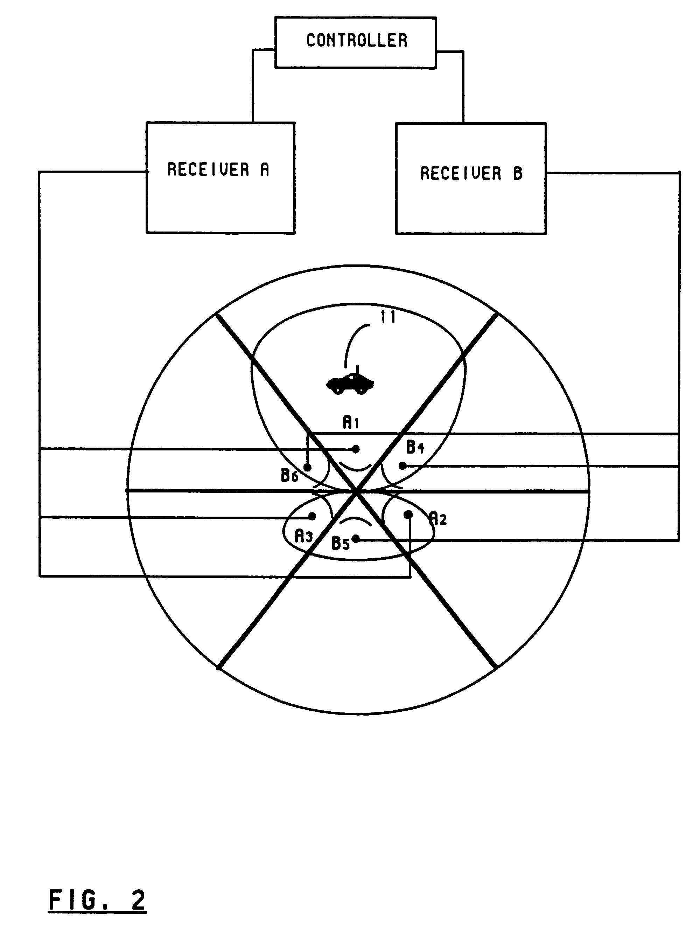

As shown in Figure 2, receiver diversity can be achieved using a proposed algorithm through the use of a receiver which is not serving the mobile because of the overlap in RF patterns of the directional antennas.

In this form of sectorization, the antenna complex consists of one directional transmit antenna and one directional receive antenna in each sector. A voice channel antenna scanning algorithm is used at the base station to determine when a handoff between sectors is required. A voice channel on this cell would have one of its receivers connected to every other receive antenna port. In figures 1 and 2, receiver A of a voice channel would be connected to antenna ports A1, A2 and A3 while receiver B would be connected to antenna ports B4, B5, and B6. When a mobile is being served by receiver A in sector A1, receiver B scans sectors B4, B5, and B6 for signal quality readings. If any of the signal quality readings reported by receiver B is better than that reported by receiver A, by a predetermined delta value, the voice channel will proceed to inform the cell controller. This message will contain the sector which detected the better signal. The cell controller will then proceed to handoff the call to a voice channel on the specified sector. If the call is handed off to a voice channel in sector B4, receiver B will lock onto the mobile while receiver A scans antenna ports A1, A2, and A3 for signal quality readings. This antenna scanning method can be extended to work with anywhere from two to six receivers available in the base station as long as at least the two sectors adjacent to and the sector to the rear of the sector serving the mobile is being scanned for signal quality readings. This method allows both rear lobe protection and diversity from the overlap in the RF coverage patterns of the adjacent sectors.

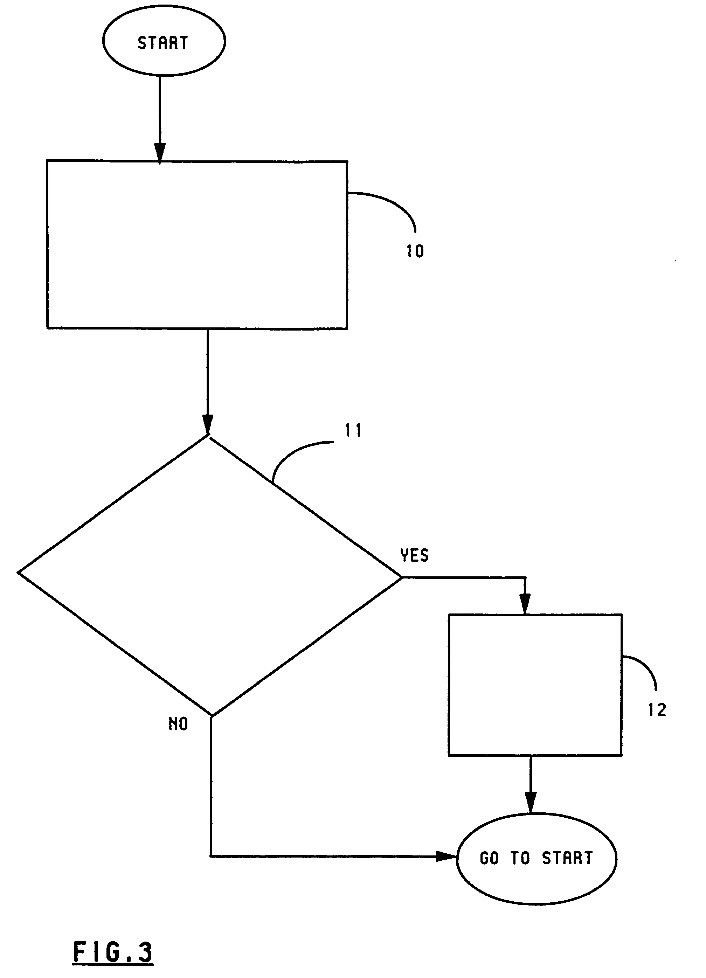

Figure 3 shows an antenna scanning algorithm used with the embodiment of figure 2. The algorithm is designed to reduce channel interference by detecting handoff conditions between sectors quickly and accurately. Depending on the configuration of the base station, a voice channel in sectored mode will be connected to all six of its antenna ports with anywhere from two to six receivers.

In operation, when serving a mobile unit, the voice channel will lock onto the mobile unit using one of these antenna ports and one receiver. At the same time, the voice channel will scan (10) the other antenna ports with the remaining receivers. If any of the antenna ports being scanned registers (11) a signal from the mobile unit being served that is of a better quality than that of the serving antenna port, by a delta value downloaded to the voice channel, the voice channel will inform (12) the cell controller in the form of a handoff request message. This message will contain an indication of the signal quality detected by this antenna port and the antenna port number which detected the signal.

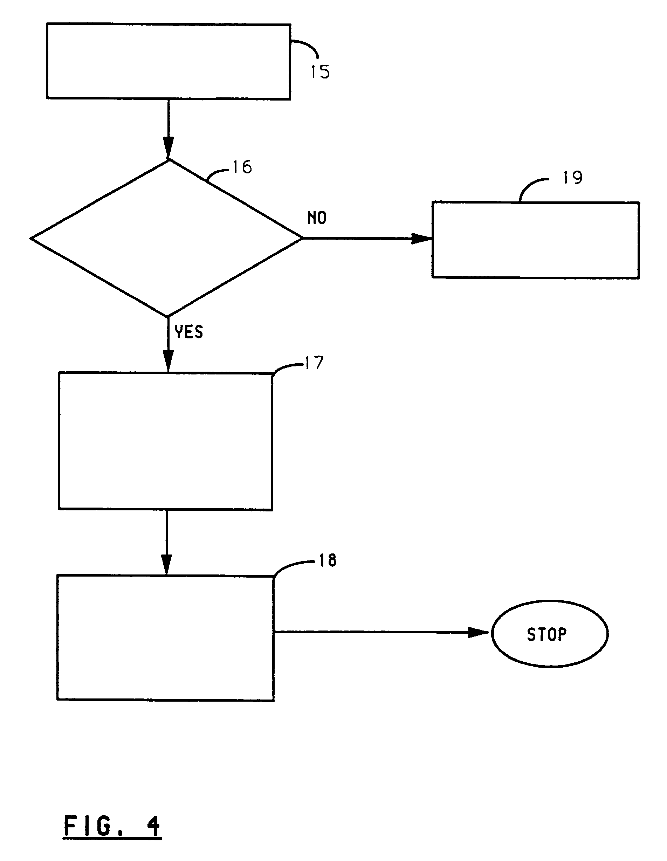

As shown by the algorithm flowchart of figure 4, at the cell controller, the handoff request is received (15). If the request is a handoff between sectors (16), it will allocate (17) a voice channel on the cell and sector associated with an antenna port specified as having the better signal. The cell controller will then proceed (18) to handoff the mobile unit to a voice channel on the specified sector. If the request is not a handoff between sectors (16), then a request (19) will be made for cell handoff algorithm. This algorithm is valid regardless of the method used in determining the quality of the signal or how diversity is obtained. Some of the methods available to determine signal quality include RSSI measurements, bit error rates, framing errors, carrier to interference ratios, or any combination of these methods.

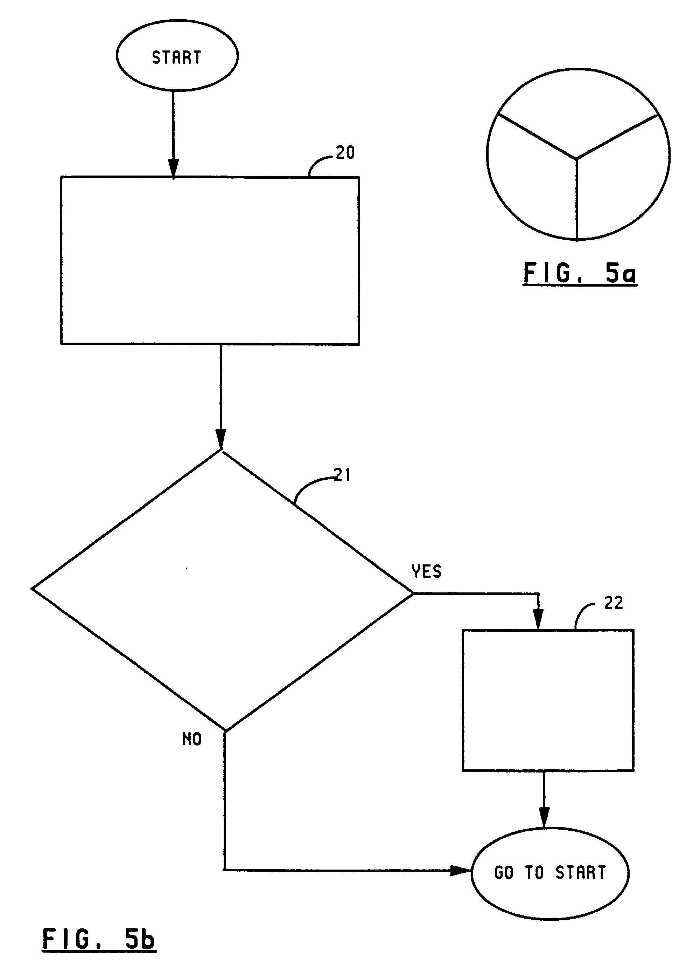

Figure 5a is an illustration of a cell using 120 degree sectorization. The antenna scanning algorithm for this arrangement is shown in figure 5b. In this arrangement, a first receiver will be used to serve the antenna port of the sector where the mobile unit is located, while the other receivers scan (20) the sectors adjacent to the serving sector and report (21,22) to the cell controller if the signal quality is better than that read by the serving receiver.

## Claims

1. A method of initiating handoffs between sectors in a mobile communications system having a base station serving a communications cell divided into a plurality of sectors, comprising the steps of:
a) sending a handoff request message (12) to a cell controller in response to deterioration of the signal strength from the serving sector (A1);
b) receiving a handoff request message (16) at said cell controller;
c) scanning (10) the sectors of the cell;
d) allocating (17) a voice channel on the cell and sector associated with the scanned sector specified as having the best signal; and
e) proceeding (18) with a handoff process from the voice channel currently serving said mobile unit (11) to the newly allocated voice channel in said specified sector,
characterised in that the serving sector (A1) has an antenna coverage which extends figure 2 into adjacent sectors and/or rear sector, and in that the improvement comprises scanning only the adjacent sectors (B4, B6) and/or the rear sector (B5) and detecting when the signal quality is better than the signal quality read from said serving sector (A1), and initiating handoff (12) in response to that fact.

2. A mobile cellular communications system having a base station serving a communications cell divided into a plurality of sectors comprising:
at least one directional receive antenna;
separate receive antenna ports (A1 to B6) for providing a separate signal from each sector within the communications cell;
a plurality of allocatable voice channels connectable to said receive antenna ports;
first and second receivers (A, B);
characterised in that the sectors comprise a first sector group (A1, A2, A3) and a second sector group (B4,B5,B6), the sectors of the first sector group covering an area adjacent to and between sectors of the second sector group; the first receiver (A) being connected to antenna ports (A1, A2, A3) corresponding to the first sector group and the second receiver (B) being connected to antenna ports (B4, B5, B6) corresponding to the second sector group, wherein the first receiver (A) is selectable by an active voice channel to service communication with a mobile unit (11) in a sector (A1) of the first group providing a highest signal quality for said active voice channel and wherein the second receiver (B) is selectable to scan other antenna ports (B4, B5, B6) for signal quality of said active voice channel only in sectors adjacent (B4, B6) to said sector servicing the mobile and sector (B5) being to the rear of said sector (A1) servicing the mobile (11),
and a cell controller dynamically responsive to said active voice channel to handoff said mobile unit from a voice channel corresponding to a sector of the first group to a voice channel corresponding to a sector of the second group having a higher signal quality.

3. The method or system recited in claim 2, wherein a cell has an even number of triangular shaped sectors having a common intersection point, characterised in that the first (A) and second (B) receivers respond to signals in alternate sectors (A1 to B6).

4. The method or system recited in claim 3 wherein one (A) of a plurality of receivers (A, B) receives signals from the mobile unit (11) in said sector (A1) servicing the mobile unit and
characterised in that remaining receivers figure 2 scan a plurality of sectors including at least sectors adjacent to and to the rear of the sector that is servicing the mobile unit.

## Patentansprüche

1. Verfahren zur Einleitung von Übergaben zwischen Sektoren in einem Mobilfunksystem mit einer Basisstation, die eine Funkzelle bedient, die in eine Vielzahl von Sektoren unterteilt ist, mit den folgenden Schritten:
a) Aussenden einer Übergabe-Anforderungsnachricht (12) an ein Zellen-Steuergerät in Abhängigkeit von der Verschlechterung der Signalstärke von dem bedienenden Sektor (A1),
b) Empfang einer Übergabe-Anforderungsnachricht (16) an dem Zellen-Steuergerät,
c) Abtasten (10) der Sektoren der Zelle,
d) Zuteilen (17) eines Sprachkanals in der Zelle und dem Sektor, der dem abgetasteten Sektor zugeteilt ist, der als derjenige angegeben ist, der das beste Signal hat, und
e) Fortführung (18) eines Übergabevorganges von dem Sprachkanal, der die Mobilfunkeinheit (11) derzeit bedient, auf einen neu zugeteilten Sprachkanal in dem angegebenen Sektor,
dadurch gekennzeichnet, daß der bedienende Sektor (A1) eine Antennenüberdeckung hat, die sich gemäß Figur 2 in benachbarte Sektoren und/oder einen rückwärtigen Sektor erstreckt, und daß die Verbesserung die Abtastung lediglich der benachbarten Sektoren (B4, B6) und/oder des rückwärtigen Sektors (B5) und die Feststellung, ob die Signalqualität besser als die von dem bedienenden Sektor (A1) festgestellte Signalqualität ist, und die Einleitung der Übergabe (12) in Abhängigkeit von dieser Tatsache umfaßt.

2. Zellulares Mobilfunksystem mit einer Basisstation, die eine Funkzelle bedient, die in eine Vielzahl von Sektoren unterteilt ist, mit:
zumindestens einer Empfangs-Richtantenne,
getrennten Empfangsantennenanschlüssen (A1 - B6) zur Lieferung eines getrennten Signal von jedem Sektor in der Funkzelle,
einer Vielzahl von zuteilbaren Sprachkanälen, die mit den Empfangsantennenanschlüssen verbindbar sind,
ersten und zweiten Empfängern (A, B),
dadurch gekennzeichnet, daß die Sektoren eine erste Sektorgruppe (A1, A2, A3) und eine zweite Sektorgruppe (B4, B5, B6) umfassen, daß die Sektoren der ersten Sektorgruppe einen Bereich benachbart zu und zwischen Sektoren der zweiten Sektorgruppe überdecken, daß der erste Empfänger (A) mit Antennenanschlüssen (A1, A2, A3) verbunden ist, die der ersten Sektorgruppe entsprechen, während der zweite Empfänger (B) mit den Antennenanschlüssen (B4, B5, B6) verbunden ist, die der zweiten Sektorgruppe entsprechen, wobei der erste Empfänger (A) von einem aktiven Sprachkanal auswählbar ist, um die Kommunikation mit einer Mobilfunkeinheit (11) in einem Sektor (A1) der ersten Gruppe zu bedienen, der die höchste Signalqualität für den aktiven Sprachkanal ergibt, und wobei der zweite Empfänger (B) auswählbar ist, um die anderen Antennenanschlüsse (B4, B5, B6) auf eine Signalqualität des aktiven Sprachkanals lediglich in Sektoren (B4, B6) benachbart zu dem die Mobilfunkeinheit bedienenden Sektor und in dem Sektor (B5) abzutasten, der sich auf der Rückseite des die Mobilfunkeinheit (11) bedienenden Sektors (A1) befindet, und daß ein Zellensteuergerät dynamisch auf den aktiven Sprachkanal anspricht, um die Mobilfunkeinheit von einem einem Sektor der ersten Gruppe entsprechenden Sprachkanal auf einen Sprachkanal zu übergeben, der einem Sektor der zweiten Gruppe entspricht, der eine höhere Signalqualität aufweist.

3. Verfahren oder System nach Anspruch 2, bei dem eine Zelle eine geradzahlige Anzahl von dreieckförmigen Sektoren mit einem gemeinsamen Schnittpunkt aufweist,
dadurch gekennzeichnet, daß die ersten (A) und zweiten (B) Empfänger auf Signale in abwechselnden Sektoren (A1 - B6) ansprechen.

4. Verfahren oder System nach Anspruch 3, bei dem einer (A) einer Vielzahl von Empfängern (A, B) Signale von der Mobilfunkeinheit (11) in dem die Mobilfunkeinheit bedienenden Sektor (A1) empfängt,
dadurch gekennzeichnet, daß die übrigen Empfänger nach Figur 2 eine Vielzahl von Sektoren unter Einschluß zumindest von Sektoren benachbart zu und auf der Rückseite des Sektors abtasten, der die Mobilfunkeinheit bedient.

## Revendications

1. Procédé de déclenchement de raccrochages entre des secteurs d'un système de communications pour postes mobiles ayant une station de base utilisée comme cellule de communications divisée en plusieurs secteurs, comportant les étapes suivantes :
a) l'émission d'un message de demande de raccrochage (12) à un organe de commande de cellule à la suite de la détérioration de l'intensité du signal provenant du secteur de desserte (A1),
b) la réception d'un message de demande de raccrochage (16) par l'organe de commande de cellule,
c) le balayage (10) des secteurs de la cellule,
d) l'affectation (17) d'un canal vocal par la cellule et le secteur associé au secteur balayé spécifié comme ayant le meilleur signal, et
e) l'exécution (18) d'une opération de raccrochage à partir du canal vocal desservant actuellement l'unité mobile (11) sur le canal vocal qui est nouvellement affecté dans le secteur spécifié,
caractérisé en ce que le secteur de desserte (A1) a une couverture d'antenne qui recouvre la figure 2 en secteurs adjacents et/ou un secteur arrière, et en ce que le perfectionnement comprend le balayage uniquement des secteurs adjacents (B4, B6) et/ou du secteur arrière (B5) et la détection du moment où la qualité du signal est meilleure que la qualité du signal lu dans le secteur de desserte (A1), et le déclenchement du raccrochage (12) en fonction de ce fait.

2. Système de communications cellulaires pour postes mobiles ayant une station de base utilisée comme cellule de communications divisée en plusieurs secteurs, comprenant :
au moins une antenne réceptrice directionnelle,
des voies séparées (A1 à B6) d'antenne réceptrice destinées à donner un signal séparé de chaque secteur dans la cellule de communications,
plusieurs canaux vocaux qui peuvent être affectés et qui peuvent être connectés aux voies d'antenne réceptrice,
un premier et un second récepteur (A, B),
caractérisé en ce que les secteurs comprennent un premier groupe de secteurs (A1, A2, A3) et un second groupe de secteurs (B4, B5, B6), les secteurs du premier groupe de secteurs recouvrant une région adjacente aux secteurs du second groupe de secteurs et comprise entre les secteurs du second groupe de secteurs, le premier récepteur (A) étant connecté au voies d'antenne (A1, A2, A3) correspondant au premier groupe de secteurs et le second récepteur (B) étant connecté aux voies d'antenne (B4, B5, B6) correspondant au second groupe de secteurs, et le premier récepteur (A) peut être sélectionné par un canal vocal actif pour la desserte d'une communication avec une unité mobile (11) dans un secteur (A1) du premier groupe donnant une plus grande qualité du signal pour le canal local actif, et le second récepteur (B) peut être sélectionné afin qu'il balaye les autres voies d'antenne (B4, B5, B6) pour déterminer la qualité du signal du canal vocal actif uniquement dans des secteurs adjacents (B4, B6) au secteur qui dessert le poste mobile et le secteur (B5) qui se trouve à l'arrière du secteur (A1) qui dessert le poste mobile (11), et
un organe de commande de cellule commandé dynamiquement par le canal vocal actif afin qu'il raccroche l'unité mobile du canal vocal correspondant à un secteur du premier groupe et le fasse passer à un canal vocal correspondant à un secteur du second groupe ayant une meilleure qualité du signal.

3. Procédé ou système selon la revendication 2, dans lequel une cellule a un nombre pair de secteurs de forme triangulaire ayant un point commun d'intersection, caractérisé en ce que le premier (A) et le second (B) récepteur répondent aux signaux de secteur qui alternent (A1 à B6).

4. Procédé ou système selon la revendication 3, dans lequel un récepteur (A) parmi plusieurs (A, B) reçoit les signaux de l'unité mobile (11) dans le secteur (A1) qui dessert l'unité mobile, et caractérisé en ce que les récepteurs restants de la figure 2 balayent plusieurs secteurs comprenant au moins des secteurs adjacents au secteur qui dessert l'unité mobile et à l'arrière de ce secteur.
